Europäisches Patentamt

European Patent Office

Office européen des brevets

(11) Veröffentlichungsnummer: **0 637 170 A2**

## (12) EUROPÄISCHE PATENTANMELDUNG

(21) Anmeldenummer: **94202159.3**

(22) Anmeldetag: **25.07.94**

(51) Int. Cl.6: **H04N 7/01**, H04N 7/24

(30) Priorität: **27.07.93 DE 4325107**

(43) Veröffentlichungstag der Anmeldung:
**01.02.95 Patentblatt 95/05**

(84) Benannte Vertragsstaaten:
**DE FR GB IT**

(71) Anmelder: **Philips Patentverwaltung GmbH**
**Wendenstrasse 35c**
**D-20097 Hamburg (DE)**

(84) **DE**

(71) Anmelder: **PHILIPS ELECTRONICS N.V.**

**Groenewoudseweg 1**
**NL-5621 BA Eindhoven (NL)**

(84) **FR GB IT**

(72) Erfinder: **Ibenthal, Achim**
**c/o Philips Patentverwalt. GmbH,**
**Wendenstrasse 35c**
**D-20097 Hamburg (DE)**

(74) Vertreter: **Peters, Carl Heinrich, Dipl.-Ing. et al**
**Philips Patentverwaltung GmbH,**
**Wendenstrasse 35c**
**D-20097 Hamburg (DE)**

(54) **Schaltungsanordnung zum Synchronisieren eines Datenstromes.**

(57) Eine Schaltungsanordnung zum Synchronisieren der mit einer niedrigen Abtastrate (CLKN) aufeinanderfolgenden Abtastwerte eines von einer hohen (CLKM) auf die niedrige (CLKN) Abtastrate konvertierten, als Folge von Abtastwerten eines Signals dargestellten Datenstromes mit einem in dem mit der hohen Abtastrate (CLKM) vorliegenden Datenstrom enthaltenen ersten Synchronsignal (SM), mit einem zyklisch mit gleichsinniger Adreßfolge beschreib- und auslesbaren Speicher (1), dem einerseits von einem Schreibadreßzähler (5), der Perioden eines die hohe Abtastrate aufweisenden ersten Abtasttaktsignals (CLKM) zählt, Schreibadreßsignale (an 8) zuleitbar sind zum Einschreiben der Abtastwerte des Datenstromes mit der hohen Abtastrate (CLKM) und dem andererseits Leseadreßsignale (an 12) zum Auslesen der Abtastwerte des Datenstromes mit der gleichen hohen Abtastrate (CLKM) von einer Verknüpfungsschaltung (13) zuführbar sind, in der die Leseadreßsignale (an 12) aus einer additiven Verknüpfung der Schreibadreßsignale (an 8) mit einem Differenzadreßsignal (DEL) erzeugbar sind, und mit einer Anordnung (17, 21, 28) zum Bilden des Differenzadreßsignals (DEL) ermöglicht eine Synchronisation bei einer Abtastratenkonversion ohne Sprünge im Synchronsignal der niedrigen Abtastrate und damit ohne Störung in der Folge der Abtastwerte dadurch, daß die Anordnung (17, 21, 28) zum Bilden des Differenzadreßsignals einen Modulozähler (17) zum Zählen der Perioden des ersten Abtasttaktsignals (CLKM), eine erste Abtast- und Halteschaltung (21) zum Speichern des Zählerstandes (PHI) des Modulozählers (17) beim Auftreten des ersten Synchronsignals (SM) sowie eine Zuordnungsschaltung (28) umfaßt, der der in der ersten Abtast- und Halteschaltung (21) gespeicherte Zählerstand (PHI) zuführbar ist und von der zu jedem dieser Zählerstände (PHI) ein Wert des Differenzadreßsignals (DEL) abgebbar ist, wobei der Schreibadreßzähler (5) einen größeren Modulus (S) aufweist als der Modulozähler (17) und der Modulus (P) des Modulozählers (17) dem ganzzahligen Verhältnis der hohen (CLKM) zur niedrigen (CLKN) Abtastrate entspricht, daß eine Dekodierschaltung (23) vorgesehen ist zum Abgeben eines die niedrige Abtastrate aufweisenden zweiten Abtasttaktsignals (CLKN) zu jedem Zeitpunkt, in dem der Modulozähler (17) einen Grundzustand (PHI = 0) annimmt, und daß eine zweite Abtast- und Halteschaltung (30) vorgesehen ist zum Abspeichern eines mit dem Leseadreßsignal (an 12) aus dem Speicher (1) ausgelesenen Abtastwertes zum Zeitpunkt des Auftretens des zweiten Abtasttaktsignals (CLKN) und Abgeben der so abgespeicherten Abtastwerte als auf die niedrige Abtastrate (CLKN) konvertierter Datenstrom (DN, SN).

EP 0 637 170 A2

FIG. 1

Die Erfindung bezieht sich auf eine Schaltungsanordnung zum Synchronisieren der mit einer niedrigen Abtastrate aufeinanderfolgenden Abtastwerte eines von einer hohen auf die niedrige Abtastrate konvertierten, als Folge von Abtastwerten eines Signals dargestellten Datenstromes mit einem in dem mit der hohen Abtastrate vorliegenden Datenstrom enthaltenen ersten Synchronsignal, mit einem zyklisch mit gleichsinniger Adreßfolge beschreib- und auslesbaren Speicher, dem einerseits von einem Schreibadreßzähler, der Perioden eines die hohe Abtastrate aufweisenden ersten Abtasttaktsignals zählt, Schreibadreßsignale zuleitbar sind zum Einschreiben der Abtastwerte des Datenstromes mit der hohen Abtastrate und dem andererseits Leseadreßsignale zum Auslesen der Abtastwerte des Datenstromes mit der gleichen hohen Abtastrate von einer Verknüpfungsschaltung zuführbar sind, in der die Leseadreßsignale aus einer additiven Verknüpfung der Schreibadreßsignale mit einem Differenzadreßsignal erzeugbar sind, und mit einer Anordnung zum Bilden des Differenzadreßsignals.

Eine Schaltungsanordnung, mit der ein digitales Fernsehsignal, welches als Folge von Abtastwerten einer ersten Abtastfrequenz vorliegt, in eine Folge von Abtastwerten einer zweiten Abtastfrequenz konvertiert werden kann, ist aus der EP-PS 0 080 712 bekannt. In dieser Druckschrift werden Maßnahmen dargestellt, wie durch Interpolation der Abtastwerte eines Eingangssignals die Abtastwerte eines Ausgangssignals gewonnen werden können. Ein Hinweis auf eine Synchronisation der Abtastwerte des Ausgangssignals mit einem vorgegebenen Synchronsignal ist dieser Druckschrift nicht zu entnehmen.

Insbesondere bei einer Konversion zeitdiskreter Fernsehsignale, d.h. solcher Signale, die als Folge von Abtastwerten mit einer bestimmten Abtastrate vorliegen und der Gestalt einen Datenstrom bilden, auf eine andere Abtastrate ist eine Synchronisation der Abtastwerte notwendig. Eine solche Synchronisation kann auch für andere als die erwähnten Fernsehsignale von Bedeutung sein. Ein besonderer Anwendungsfall stellt dabei eine Konversion von einer hohen auf eine niedrige Abtastrate dar. So muß beispielsweise in horizontal verkoppelten Fernsehsystemen dafür Sorge getragen werden, daß die Referenz für den Bildanfang in jeder Zeile unabhängig von der Abtastrate an einer vorgegebenen Position liegt.

Es kann daran gedacht werden, das Ausrichten des Bildanfangs in jeder Zeile auf die vorgegebene Position mit Hilfe einer analogen oder digitalen Phasenregelung des Abtasttaktes, insbesondere desjenigen mit der niedrigen Abtastrate, in Abhängigkeit von einem horizontalen Synchronisierungssignal vorzunehmen. Dies ist jedoch sehr aufwendig und führt in vielen Fällen nicht zum Ziel.

Aus der Monografie von B. Morgenstern, "Technik der magnetischen Videosignalaufzeichnung", Teubner-Verlag, 1985, Abschnitt 5.5.4.4. auf den Seiten 111 bis 113, ist eine Schaltungsanordnung zur digitalen, zeilenfrequenten Grobkorrektur von Zeitbasisfehlern beim Abspielen einer Videoaufzeichnung vom Videorekorder und bei der Wiedergabe dieser Videoaufzeichnung auf einem Bildschirmgerät bekannt. Diese Anordnung umfaßt einen Speicher mit wahlfreiem Zugriff, in den nacheinander Datenworte, bestehend aus den Daten von je drei Bildelementen, eingeschrieben werden. Dieser Speicher ist so organisiert, daß die Werte der Bildelemente vom Band mit aufsteigender Adreßfolge zyklisch eingelesen werden. Die Zeitfehlerkorrektur wird dabei dadurch erreicht, daß der Zeitbasisfehler in eine Adressendifferenz umgesetzt wird. Nach dem Einlesen eines Bildelements erfolgt unmittelbar das Auslesen eines anderen Bildelements, dessen Adresse sich aus der des gerade eingelesenen, verändert um die Adressendifferenz, ergibt, wobei die Adressendifferenz bzw. Differenzadresse von einem Zeitfehlerdetektor ermittelt wird. Die Adreßfolge für das Einlesen wird von einem Schreibadreßzähler erzeugt, der zyklisch mit einem Drittel der Abtastfrequenz getaktet wird. Der Zeitfehlerdetektor, dem das Horizontalsynchronsignal vom Band und eine Horizontalsynchronreferenz zugeführt werden, ermittelt den Zeitfehler als Anzahl von Perioden der Taktfrequenz des Schreibadreßzählers und setzt ihn in die Adressendifferenz um, die beim Lesen in einer Subtrahierstufe verarbeitet wird.

Auch zur Beschreibung dieser Schaltungsanordnung wird kein Hinweis auf eine Synchronisierung bei einer Abtastratenkonversion gegeben.

Die Erfindung hat die Aufgabe, eine Schaltungsanordnung der gattungsgemäßen Art zum Synchronisieren eines Datenstromes zu schaffen, die eine einfache Synchronisation bei einer Abtastratenkonversion ermöglicht und vielseitig einsetzbar ist.

Diese Aufgabe wird erfindungsgemäß dadurch gelöst, daß die Anordnung zum Bilden des Differenzadreßsignals einen Modulozähler zum Zählen der Perioden des ersten Abtasttaktsignals, eine erste Abtast- und Halteschaltung zum Speichern des Zählerstandes des Modulozählers beim Auftreten des ersten Synchronsignals sowie eine Zuordnungsschaltung umfaßt, der der in der ersten Abtast- und Halteschaltung gespeicherte Zählerstand zuführbar ist und von der zu jedem dieser Zählerstände ein Wert des Differenzadreßsignals abgebbar ist, wobei der Schreibadreßzähler einen größeren Modulus aufweist als der Modulozähler und der Modulus des Modulozählers dem ganzzahligen Verhältnis der hohen zu niedrigen Abtastrate entspricht, daß eine Dekodierschaltung vorgesehen ist zum Abgeben eines die niedrige Abtastrate aufweisenden zweiten Abtasttaktsignals zu jedem Zeitpunkt, in dem der Modulozähler einen Grundzustand annimmt, und daß eine zweite Abtast- und Halteschaltung vorgesehen ist zum Abspeichern eines mit dem Leseadreßsignal aus dem Speicher ausgelesenen Abtastwertes zum Zeitpunkt des Auftretens des zweiten Abtasttaktsignals und Abgeben der so abgespeicherten Abtastwerte als auf die niedrige Abtastrate konvertierter Datenstrom.

Die Erfindung ermöglicht eine Synchronisation des Abtasttaktes mit der niedrigen Abtastrate ohne aufwendige Phasenregelung. Sie ist insbesondere geeignet zur Verwendung bei der Unterabtastung zeitdiskreter Daten eines Datenstromes mit hoher Abtastrate zur Gewinnung eines Datenstromes mit niedriger Abtastrate zur Herstellung einer festen Phasenbeziehung zu einem Referenzsignal, ohne daß Diskontinuitäten im Datenstrom auftreten. Dies ist insbesondere dann von Vorteil, wenn der Datenstrom einer rekursiven Filterung unterworfen werden soll. Zwar ist es grundsätzlich möglich, daß der Modulozähler mit einem zweiten Synchronsignal synchronisiert wird, d.h. daß er durch dieses zweite Synchronsignal in einen Grundzustand rücksetzbar ist. Dies führt allerdings zu den erwähnten Diskontinuitäten im Datenstrom, die bei einer rekursiven Filterung desselben zu Fehlern führen. Insbesondere bei einem Einsatz von Signalprozessoren für die Verwirklichung der rekursiven Filterung machen sich diese Fehler als Diskontinuitäten im Programmablauf bemerkbar, die dazu führen, daß entweder Rekursivanteile beim Synchronisieren nicht zurückgesetzt werden oder daß falsche Rekursivanteile im weiteren Ablauf der Signalverarbeitung verwendet werden, diese somit in fehlerhafter Weise beeinflussen. Um eine solche rekursive Verschleppung falscher Signalanteile in der weiteren Signalverarbeitung zu verhindern, müßte dann ein sehr aufwendiges Signalverarbeitungsprogramm vorgesehen werden, um sogenannte interne Pipelinestrukturen zurückzusetzen, was außerdem bei der Signalverarbeitung eine hohe Zeitspanne in Anspruch nimmt. Beim Einsatz der erfindungsgemäßen Schaltungsanordnung kann auf ein solches Rücksetzen des Modulozählers wahlweise verzichtet werden, wodurch die genannten Fehler bei der rekursiven Filterung ausgeschlossen werden. Damit läßt sich die erfindungsgemäße Schaltungsanordnung vorteilhaft in entsprechenden Signalprozessorsystemen einsetzen, in denen rekursive Rechenvorgänge zur Signalverarbeitung ablaufen.

Vorteilhaft umfassen die Abtastwerte innerhalb des Datenstromes einen Informationssignalanteil und einen dem ersten Synchronsignal zugehörigen Synchronsignalanteil. Damit kann in einfacher Weise die Synchronisationsinformation mit in den Datenstrom mit der niedrigen Abtastrate übertragen und dort zum Beispiel für Steuerzwecke verfügbar gemacht werden.

Die erfindungsgemäße Schaltungsanordnung ist bevorzugt anwendbar für zeitdiskrete Fernsehsignale, wobei der Datenstrom als Folge von Abtastwerten eines Fernsehsignals dargestellt ist. Dabei zielt die Erfindung insbesondere darauf ab, ein eingehendes Fernsehsignal in seiner Abtastrate zu konvertieren und außerdem in seiner horizontalen Phasenlage an ein zweites Fernsehsignal anzupassen. Wenn sich nämlich das eingehende Fernsehsignal ("Unterkanal") und das zweite Fernsehsignal ("Hauptkanal") in ihrer Horizontalfrequenz mehr oder weniger unterscheiden, treten von Zeile zu Zeile Phasenverschiebungen auf, die durch die Erfindung ausgeglichen werden.

Vorteilhaft ist die erfindungsgemäße Schaltungsanordnung auch einsetzbar für eine mit der niedrigen Abtastrate erfolgende Unterabtastung eines mit der hohen Abtastrate vorliegenden Datenstromes. Insbesondere empfiehlt sich dieser Einsatz bei sogenannten "Oversampling"-Verfahren, in denen eine nachgeschaltete Unterabtastung erfolgt.

Bevorzugt ist die erfindungsgemäße Schaltungsanordnung auch einsetzbar in einer Anordnung zur Bildformatkonversion, wie sie beispielsweise für "Bild-in-Bild-Verfahren" zum Einsatz kommen. Bei dieser Bild-in-Bild-Funktion wird ein kleines Bild aus dem Unterkanal in das Bild des Hauptkanals "eingestanzt", wobei der Systemtakt auch für die Darstellung des eingestanzten Bildes aus dem Hauptkanal abgeleitet wird. Der Unterkanal wird dabei zwecks vertikaler Bildanpassung nach Unterabtastung entsprechend einem Verkleinerungsfaktor zwischengespeichert. Um zu vermeiden, daß es im eingestanzten Bild zu einem Ausreißen von Kanten kommt, müssen die Zeilenanfänge des unterabgetasteten Bildes aus dem Unterkanal mit dem Horizontalsynchronsignal des Unterkanals in einer festen Phasenbeziehung stehen. Dies wird durch die Erfindung in einfacher Weise sichergestellt.

Ein Ausführungsbeispiel der erfindungsgemäßen Schaltungsanordnung ist in der Zeichnung dargestellt und wird im nachfolgenden näher beschrieben.

Es zeigen:

Fig. 1 das Blockschaltbild einer erfindungsgemäßen Schaltungsanordnung,

Fig. 2 eine Tabelle zur Erläuterung der Funktionsweise einer Zuordnungsschaltung für die Anordnung nach Fig. 1,

Fig. 3 ein Signaldiagramm für einen ersten Betriebsfall und

Fig. 4 ein Signaldiagramm für einen zweiten Betriebsfall der Schaltungsanordnung nach Fig. 1.

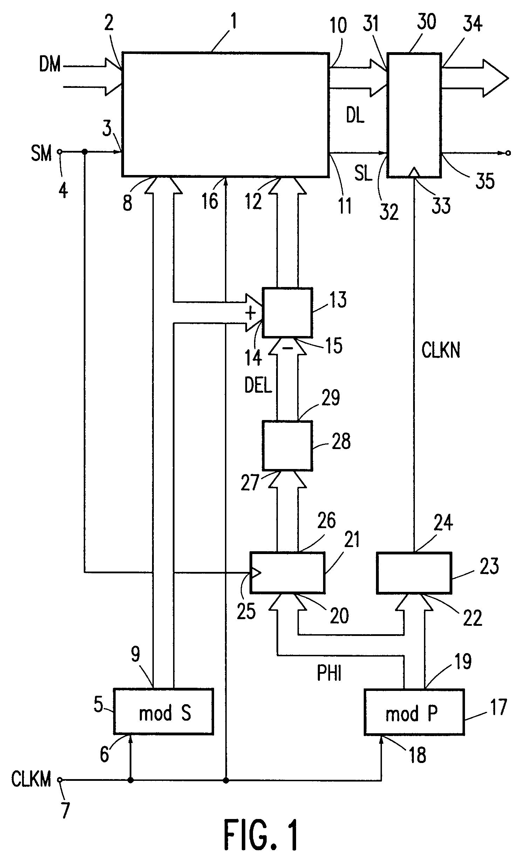

Das Ausführungsbeispiel der erfindungsgemäßen Schaltungsanordnung zum Synchronisieren eines Datenstromes gemäß Fig. 1 weist einen Ringspeicher 1 auf, der zyklisch mit gleichsinniger Adreßfolge beschreib- und auslesbar ist. Dem Ringspeicher 1 werden an einem ersten Dateneingang 2 die mit einer hohen Abtastrate aufeinanderfolgenden Abtastwerte des Informationssignalanteils DM eines Datenstromes zugeführt. Der Informationssignalanteil DM stellt beispielsweise ein Fernsehsignal dar. Der Datenstrom umfaßt ferner als Synchronsignalanteil ein erstes Synchronsignal SM, welches von einem Anschluß 4 über einen zweiten Dateneingang 3 dem Ringspeicher 1 zugeführt wird. Vorzugsweise werden zeitlich einander zugeordnete Abtastwerte des Informationssignalanteils DM und des ersten Synchronsignals SM aus dem Datenstrom im Ringspeicher 1 als gemeinsames Datenwort abgespeichert.

Die Schaltungsanordnung nach Fig. 1 umfaßt weiterhin einen Schreibadreßzähler 5, der modulo S zählt, wobei der Modulus S des Schreibadreßzählers 5 größer ist als das ganzzahlig gewählte Verhältnis der hohen zu niedrigen Abtastrate des Datenstromes, auf das im folgenden noch eingegangen wird. Dem Schreibadreßzähler 5 wird an einem Takteingang 6 ein über einen Anschluß 7 ein erstes Abtasttaktsignal CLKM zugeführt, dessen Frequenz der hohen Abtastrate des Datenstromes entspricht bzw. mit dem das Signal zur Gewinnung der Abtastwerte mit der hohen Abtastrate abgetastet worden ist. Der Ringspeicher 1 ist zur Speicherung von wenigstens S Datenworten des Datenstromes eingerichtet. Die Auswahl der einzelnen Speicherplätze zum Einschreiben der Abtastwerte, die an den Dateneingängen 2 und 3 zugeführt werden, erfolgt über Schreibadreßsignale, die dem Ringspeicher 1 an einem Schreibadreßsignaleingang 8 zugeführt werden. Die Schreibadreßsignale werden vom Schreibadreßzähler 5 erzeugt und an dessen Ausgang 9 abgegeben.

Aus dem Ringspeicher 1 können die darin abgespeicherten Abtastwerte mit einer vorgebbaren Verzögerung wieder ausgelesen werden. Dazu dient ein erster Datenausgang 10, an dem der Informationssignalanteil DL des Datenstromes mit der gleichen hohen Abtastrate des ersten Abtasttaktsignals CLKM wie am ersten Dateneingang 2, jedoch diesem gegenüber um eine einstellbare Anzahl von Perioden des ersten Abtasttaktsignals CLKM verzögert, abgegeben wird. Mit der gleichen Verzögerung wird an einem zweiten Datenausgang 11 ein Synchronsignal SL abgegeben, das im übrigen dem ersten Synchronsignal SM entspricht. Zum Auslesen der Abtastwerte des Datenstromes über den ersten und den zweiten Datenausgang 10, 11 wird dem Ringspeicher 1 an einem Leseadreßsignaleingang 12 ein entsprechendes Leseadreßsignal zugeführt.

Zur Einstellung der Verzögerung zwischen dem Einschreiben der Abtastwerte und ihrem Auslesen umfaßt die Schaltungsanordnung nach Fig. 1 weiterhin eine Verknüpfungsschaltung 13, die beispielsweise als Subtrahierer ausgebildet ist. Diesem Subtrahierer wird an einem ersten Eingang 14 das Schreibadreßsignal vom Ausgang 9 des Schreibadreßzählers 5 und an einem zweiten Eingang 15 ein Differenzadreßsignal zugeführt. Schreibadreßsignale und Differenzadreßsignale werden in der Verknüpfungsschaltung 13 additiv verknüpft, wobei diese additive Verknüpfung begrifflich auch eine Subtraktion der genannten Signale unter korrekter Beachtung ihrer Vorzeichen beinhalten soll.

Zur Bewerkstelligung der Schreib- und Lesevorgänge wird dem Ringspeicher 1 ferner an einem Taktsignaleingang 16 das erste Abtasttaktsignal CLKM vom Anschluß 7 zugeleitet. Während jeder Periode des ersten Abtasttaktsignals CLKM erfolgt sowohl ein Schreibvorgang als auch ein Lesevorgang.

Zum Bilden des Differenzadreßsignals, welches dem zweiten Eingang 15 der Verknüpfungsschaltung 13 zugeleitet wird, umfaßt das Ausführungsbeispiel nach Fig. 1 weiterhin einen Modulozähler 17, der einen Modulus P aufweist, der dem ganzzahligen Verhältnis der hohen zu niedrigen Abtastrate des Datenstromes entspricht; dabei ist der Modulus P kleiner als der Modulus S des Schreibadreßzählers 5, wodurch sichergestellt wird, daß auch für die größte einzustellende Verzögerung genügend Abtastwerte des Datenstromes im Ringspeicher 1 abgespeichert sind. Der Modulozähler 17 weist einen Takteingang 18 für das erste Abtasttaktsignal CLKM auf. Der Zählerstand des Modulozählers 17 wird an einem Ausgang 19 abgegeben und einem Zählerstandeingang 20 einer ersten Abtast- und Halteschaltung 21 zum Speichern des Zählerstandes des Modulozählers 17 beim Auftreten des ersten Synchronsignals SM sowie weiterhin einem Zählerstandeingang 22 einer Dekodierschaltung 23 zugeführt, durch die ein Grundzustand des Modulozählers 17 detektiert wird. In diesem Grundzustand wird von der Dekodierschaltung 23 an einem Ausgang 24 ein Signal mit hohem logischem Pegel abgegeben, während der übrigen Zeitintervalle liegt hier ein Signal mit niedrigem logischem Pegel an. Insgesamt wird dadurch am Ausgang 24 ein die niedrige Abtastrate aufweisendes, zweites Abtasttaktsignal CLKN abgegeben. Der Modulozähler 17 dient zusammen mit der Dekodierschaltung 23 als Referenz für die Phase des Datenstromes mit der niedrigen Abtastrate, der Modulus P bildet den Unterabtastfaktor zwischen der hohen und der niedrigen Abtastrate.

Durch im ersten Synchronsignal SM enthaltene Synchronimpulse, die beispielsweise mit dem Abtastwert des Informationssignalanteils DM zusammenfallen, der den Beginn einer Fernsehzeile darstellt, wenn der Informationssignalanteil DM ein Fernsehsignal darstellt, werden in der ersten Abtast- und Halteschaltung 21 die dann gerade aktuellen Werte des über den Zählerstandeingang 20 zugeführten Zählerstands des Modulozählers abgespeichert. Dazu wird das erste Synchronsignal SM vom Anschluß 4 über einen Abtastsignaleingang 25 der ersten Abtast- und Halteschaltung 21 zugeleitet. Bis zum Eintreffen eines nächsten Impulses des ersten Synchronsignals SM gibt die erste Abtast-und Halteschaltung 21 den gespeicherten Zählerstand an einem Ausgang 26 ab. Er wird von dort einem Eingang 27 einer Zuordnungsschaltung 28 zugeleitet, die zu jedem der möglichen Zählerstände des Modulozählers 17 einen vorgebbaren Wert des Differenzadreßsignals an ihrem Ausgang 29 abgibt und dieses mit DEL bezeichnete Differenzadreßsignal dem zweiten Eingang 15 der Verknüpfungsschaltung 13 zuleitet.

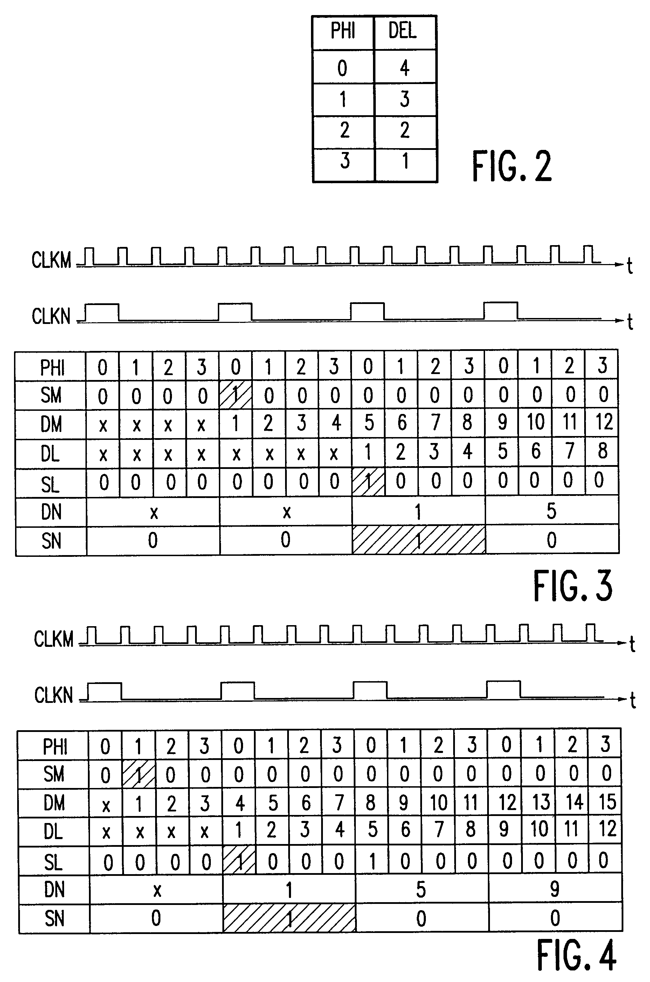

Fig. 2 zeigt eine Tabelle zur Erläuterung der Funktionsweise der Zuordnungsschaltung 28, exemplarisch für den Wert $P = 4$. Diese liefert eine tabellenartige Zuordnung zwischen dem mit PHI bezeichneten Zählerstand des Modulozählers 17 am Zählerstandeingang 20 und dem Wert des Differenzadreßsignals DEL. Dieser tabellenartige Zusammenhang in Fig. 2 läßt sich auch durch die Rechenvorschrift

$$DEL = P - PHI + K$$

darstellen, wobei K eine ganzzahlige Konstante ist und im vorliegenden Fall zu 0 gewählt wurde.

Das Ausführungsbeispiel nach Fig. 1 umfaßt weiterhin eine zweite Abtast- und Halteschaltung 30, der an einem ersten Dateneingang 31 der Informationssignalanteil DL des Datenstromes vom ersten Datenausgang 10 und an einem zweiten Dateneingang 32 das Synchronsignal SL vom zweiten Datenausgang 11 des Ringspeichers 1 zugeführt werden. Diese Signale werden beim Auftreten eines der Impulse im zweiten Abtasttaktsignal CLKN, welches der zweiten Abtast- und Halteschaltung 30 an einem Abtastsignaleingang 33 zugeleitet wird, gespeichert und bis zum nächsten Impuls im zweiten Abtasttaktsignal CLKN an Datenausgang 34 für den Informationssignalanteil DN des Datenstromes mit niedriger Abtastrate bzw. am Datenausgang 35 für das entsprechende Synchronsignal SM mit der niedrigen Abtastrate abgegeben.

In Fig. 3 ist beispielhaft ein erster Betriebsfall der Schaltungsanordnung nach Fig. 1 in gemischter Tabellen- bzw. Diagrammform dargestellt. In den beiden obersten Zeilen der Fig. 3 oberhalb der tabellenartigen Aufstellung finden sich die Abtasttaktsignale CLKM und CLKN für die hohe bzw. die niedrige Abtastrate, aufgetragen über der Zeit t. Das erste Abtasttaktsignal CLKM weist die vierfache Frequenz des zweiten Abtasttaktsignals CLKN auf; entsprechend ist der Modulus P des Modulozählers 17 auf den Wert 4 festgesetzt. In der ersten Zeile des Tabellenteils der Fig. 3 ist für die einzelnen Perioden des ersten Abtasttaktsignals CLKM der zugehörige Wert des Zählerstands PHI des Modulozählers 17 dargestellt, der zyklisch umlaufend die Werte 0, 1, 2 bzw. 3 annimmt. Fig. 3 zeigt den Fall, daß der Datenstrom DM und SM an den Dateneingängen 2 bzw. 3 des Ringspeichers 1 sich in Phase mit dem Zählerstand PHI, d.h. in Phase mit dem zweiten Abtasttaktsignal CLKN befindet. Der Synchronimpuls im ersten Synchronsignal SM ist dazu durch Unterlegung des entsprechenden Tabellenfeldes hervorgehoben.

Entsprechend beginnen die Abtastwerte des Informationssignalanteils DM des Datenstromes, die mit 1 beginnend durchnumeriert sind, zeitlich zusammenfallend mit dem Impuls im ersten Synchronsignal SM in einem Zeitintervall, in dem der Zählerstand PHI des Modulozählers 17 Null ist. Daher wird in der ersten Abtast- und Halteschaltung 21 für den Zählerstand PHI der Wert 0 abgespeichert und der Zuordnungsschaltung 28 zugeleitet. Diese liefert an ihrem Ausgang 29 für das Differenzadreßsignal DEL den Wert 4 an die Verknüpfungsschaltung 13, so daß durch den Ringspeicher 1 eine Verzögerung um vier Perioden des ersten Abtasttaktsignals CLKM vorgenommen wird. Entsprechend findet sich der Beginn der Reihe der Abtastwerte des Informationssignalanteils DL sowie das Synchronsignal SL hierzu genau eine Periode des zweiten Abtasttaktsignals CLKN später, was in der vierten und fünften Zeile der Tabelle der Fig. 3 dargestellt ist. Durch den gleichzeitig auftretenden Impuls im zweiten Abtasttaktsignal CLKN werden diese Werte - der erste Abtastwert des Informationssignalanteils DL sowie der Synchronimpuls im Synchronsignal SL - in der zweiten Abtast- und Halteschaltung 30 gespeichert und von dieser als Datenstrom DN, SN mit niedriger Abtastrate abgegeben, wie in den letzten beiden Zeilen der Tabelle der Fig. 3 zu sehen ist.

Fig. 4 zeigt ein weiteres Beispiel eines Betriebsfalles der Schaltungsanordnung nach Fig. 1, bei dem wieder dieselben Signale in derselben Reihenfolge und Anordnung aufgetragen sind. Im Betriebsfall nach Fig. 4 befindet sich jedoch der Datenstrom DM, SM an den Dateneingängen 2, 3 des Ringspeichers 1 nicht in Phase mit dem Zählerstand PHI des Modulozählers 17 und damit nicht in Phase mit dem zweiten Abtasttaktsignal CLKN, vielmehr treten der Impuls im ersten Synchronsignal SM sowie der erste Abtastwert des Informationssignalanteils DM auf, wenn der Zählerstand PHI den Wert 1 angenommen hat. Entsprechend wird durch die Zuordnungsschaltung 28 für das Differenzadreßsignal DEL der Wert 3 festgelegt und im Ringspeicher 1 die Abtastwerte entsprechend um nur drei Perioden des ersten Abtasttaktsignals CLKM verzögert. Fig. 4 zeigt, daß der Datenstrom DL, SL an den Datenausgängen 10, 11 des Ringspeichers 1 wieder in Phase zu den Impulsen im zweiten Abtasttaktsignal CLKN liegt. Dadurch ergibt sich für den Datenstrom DN, SN mit der niedrigen Abtastrate an den Datenausgängen 34, 35 dieselbe Folge von Abtastwerten wie im Betriebsbeispiel nach Fig. 3, ebenfalls in Phase zu den Impulsen im zweiten Abtasttaktsignal CLKN. Durch die Schaltungsanordnung nach Fig. 1 ist somit eine Phasenanpassung ohne ein asynchrones Rücksetzen des Modulozählers möglich, wodurch die Gefahr der Störung rekursiver Rechenvorgänge für die Abtastwerte des Datenstromes und damit die Gefahr einer Beeinträchtigung beispielsweise vertikaler Steuerungen oder Filtervorgänge ausgeschlossen wird. Es wird also eine Unterabtastung in Phase zu dem ersten Abtasttaktsignal CLKM sichergestellt, ohne daß eine Phasenänderung des zweiten Abtasttaktsignals CLKN erforderlich ist. Dies wird im vorstehend beschriebenen Ausführungsbeispiel insbesondere durch die zum Informationssignalanteil simultan erfolgte Verzögerung des Synchronsignals deutlich.

## Patentansprüche

1. Schaltungsanordnung zum Synchronisieren der mit einer niedrigen Abtastrate (CLKN) aufeinanderfolgenden Abtastwerte eines von einer hohen (CLKM) auf die niedrige (CLKN) Abtastrate konvertierten, als Folge von Abtastwerten eines Signals dargestellten Datenstromes mit einem in dem mit der hohen Abtastrate (CLKM) vorliegenden Datenstrom enthaltenen ersten Synchronsignal (SM), mit einem zyklisch mit gleichsinniger Adreßfolge beschreib- und auslesbaren Speicher (1), dem einerseits von einem schreibadreßzähler (5), der Perioden eines die hohe Abtastrate aufweisenden ersten Abtasttaktsignals (CLKM) zählt, Schreibadreßsignale (an 8) zuleitbar sind zum Einschreiben der Abtastwerte des Datenstromes mit der hohen Abtastrate (CLKM) und dem andererseits Leseadreßsignale (an 12) zum Auslesen der Abtastwerte des Datenstromes mit der gleichen hohen Abtastrate (CLKM) von einer Verknüpfungsschaltung (13) zuführbar sind, in der die Leseadreßsignale (an 12) aus einer additiven Verknüpfung der Schreibadreßsignale (an 8) mit einem Differenzadreßsignal (DEL) erzeugbar sind, und mit einer Anordnung (17, 21, 28) zum Bilden des Differenzadreßsignals (DEL),
dadurch gekennzeichnet, daß die Anordnung (17, 21, 28) zum Bilden des Differenzadreßsignals einen Modulozähler (17) zum Zählen der Perioden des ersten Abtasttaktsignals (CLKM), eine erste Abtast- und Halteschaltung (21) zum Speichern des Zählerstandes (PHI) des Modulozählers (17) beim Auftreten des ersten Synchronsignals (SM) sowie eine Zuordnungsschaltung (28) umfaßt, der der in der ersten Abtast- und Halteschaltung (21) gespeicherte Zählerstand (PHI) zuführbar ist und von der zu jedem dieser Zählerstände (PHI) ein Wert des Differenzadreßsignals (DEL) abgebbar ist, wobei der Schreibadreßzähler (5) einen größeren Modulus (S) aufweist als der Modulozähler (17) und der Modulus (P) des Modulozählers (17) dem ganzzahligen Verhältnis der hohen (CLKM) zur niedrigen (CLKN) Abtastrate entspricht, daß eine Dekodierschaltung (23) vorgesehen ist zum Abgeben eines die niedrige Abtastrate aufweisenden zweiten Abtasttaktsignals (CLKN) zu jedem Zeitpunkt, in dem der Modulozähler (17) einen Grundzustand (PHI = 0) annimmt, und daß eine zweite Abtast- und Halteschaltung (30) vorgesehen ist zum Abspeichern eines mit dem Leseadreßsignal (an 12) aus dem Speicher (1) ausgelesenen Abtastwertes zum Zeitpunkt des Auftretens des zweiten Abtasttaktsignals (CLKN) und Abgeben der so abgespeicherten Abtastwerte als auf die niedrige Abtastrate (CLKN) konvertierter Datenstrom (DN, SN).

2. Schaltungsanordnung nach Anspruch 1,
dadurch gekennzeichnet, daß die Abtastwerte innerhalb des Datenstromes einen Informationssignalanteil (DM, DL, DN) und einen dem ersten Synchronsignal zugehörigen Synchronsignalanteil (SM, SL, SN) umfassen.

3. Schaltungsanordnung nach Anspruch 1 oder 2,
dadurch gekennzeichnet, daß der Datenstrom als Folge von Abtastwerten eines Fernsehsignals dargestellt ist.

4. Schaltungsanordnung nach Anspruch 1, 2 oder 3,
dadurch gekennzeichnet, daß der Modulozähler (17) mit einem zweiten Synchronsignal synchronisierbar ist.

5. Schaltungsanordnung nach Anspruch 1, 2, 3 oder 4,
gekennzeichnet durch einen Einsatz für eine mit der niedrigen Abtastrate (CLKN) erfolgende Unterabtastung eines mit der hohen Abtastrate (CLKM) vorliegenden Datenstromes.

6.  Schaltungsanordnung nach Anspruch 1, 2, 3, 4 oder 5,
    gekennzeichnet durch einen Einsatz in einer Anordnung zur Bildformatkonversion.

FIG. 1

| PHI | DEL |
|-----|-----|
| 0 | 4 |
| 1 | 3 |
| 2 | 2 |
| 3 | 1 |

## FIG. 2

| PHI | 0 | 1 | 2 | 3 | 0 | 1 | 2 | 3 | 0 | 1 | 2 | 3 | 0 | 1 | 2 | 3 |
|-----|---|---|---|---|---|---|---|---|---|---|---|---|---|---|---|---|
| SM | 0 | 0 | 0 | 0 | 1 | 0 | 0 | 0 | 0 | 0 | 0 | 0 | 0 | 0 | 0 | 0 |
| DM | x | x | x | x | 1 | 2 | 3 | 4 | 5 | 6 | 7 | 8 | 9 | 10 | 11 | 12 |
| DL | x | x | x | x | x | x | x | x | 1 | 2 | 3 | 4 | 5 | 6 | 7 | 8 |
| SL | 0 | 0 | 0 | 0 | 0 | 0 | 0 | 0 | 1 | 0 | 0 | 0 | 0 | 0 | 0 | 0 |
| DN | x | | | | x | | | | 1 | | | | 5 | | | |
| SN | 0 | | | | 0 | | | | 1 | | | | 0 | | | |

## FIG. 3

| PHI | 0 | 1 | 2 | 3 | 0 | 1 | 2 | 3 | 0 | 1 | 2 | 3 | 0 | 1 | 2 | 3 |
|-----|---|---|---|---|---|---|---|---|---|---|---|---|---|---|---|---|
| SM | 0 | 1 | 0 | 0 | 0 | 0 | 0 | 0 | 0 | 0 | 0 | 0 | 0 | 0 | 0 | 0 |
| DM | x | 1 | 2 | 3 | 4 | 5 | 6 | 7 | 8 | 9 | 10 | 11 | 12 | 13 | 14 | 15 |
| DL | x | x | x | x | 1 | 2 | 3 | 4 | 5 | 6 | 7 | 8 | 9 | 10 | 11 | 12 |
| SL | 0 | 0 | 0 | 0 | 1 | 0 | 0 | 0 | 1 | 0 | 0 | 0 | 0 | 0 | 0 | 0 |
| DN | x | | | | 1 | | | | 5 | | | | 9 | | | |
| SN | 0 | | | | 1 | | | | 0 | | | | 0 | | | |

## FIG. 4